# EUROPÄISCHE PATENTSCHRIFT

(11) **EP 1 619 738 B1**
(45) Veröffentlichungstag und Bekanntmachung des Hinweises auf die Patenterteilung: **06.10.2010**
(21) Anmeldenummer: 05015549.8
(22) Anmeldetag: 18.07.2005
(51) Int. Cl.: H01M 8/04

(54) **System zur Wassergewinnung aus einem Abgasstrom einer Brennstoffzelle eines Luftfahrzeuges**
System for water recovery from an exhaust stream of a fuel cell of an aircraft
Système de récupération de l'eau du gaz résiduel d'une pile à combustible d'un aéronef

(30) Priorität: 19.07.2004 DE 102004034870
(43) Veröffentlichungstag der Anmeldung: 25.01.2006
(73) Patentinhaber: Liebherr-Aerospace Lindenberg GmbH, 88161 Lindenberg/Allgäu (DE)
(72) Erfinder: Metzler, Dirk, A-6912 Hörbranz (AT)
(74) Vertreter: Herrmann, Uwe

(56) Entgegenhaltungen:
- DE-A1- 10 152 311
- DE-A1- 10 216 709
- DE-A1- 19 943 059
- DE-C2- 19 821 952

## Beschreibung

Die vorliegende Erfindung betrifft ein System zur Wassergewinnung aus einem Abgasstrom einer Brennstoffzelle eines Luftfahrzeuges mit einer Brennstoffzelle zur Energieversorgung des Luftfahrzeuges, mit einer Entspannungseinheit, in der das Brennstoffzellenabgas entspannt wird sowie mit einem Kondensor zur Kondensation von Wasser aus dem Brennstoffzellenabgas, wobei der Kondensor auf seiner warmen Seite von dem Brennstoffzellenabgas und auf seiner kalten Seite von einem Kühlmedium durchströmt wird, wobei die warme Seite des Kondensors der Entspannungseinheit vorgeschaltet ist und wobei das Kühlmedium durch in der Entspannungseinheit entspanntes, entfeuchtetes Brennstoffzellenabgas gebildet wird.

Ein derartiges System zur Wassergewinnung ist aus der DE 102 16 709 A1 bekannt. Diese Druckschrift betrifft ein Verfahren zur Wasseraufbereitung und Verteilung von bordgeneriertem Wasser in Luftfahrzeugen. Zur Erzeugung elektrischer Energie dient eine Hochtemperatur - Brennstoffzelle, der ein Kondensationsprozess nachgeschaltet ist, mittels dessen Wasser aus dem Abgas der Brennstoffzelle auskondensiert wird. Der Kondensationsprozess umfasst eine Turbine sowie einen dieser nachgeschalteten Wärmetauscher. Der Wärmetauscher wird auf seiner kalten Seite von Luft durchströmt, die anschließend der Brennstoffzelle zugeführt wird.

Ein einer Brennstoffzelle nachgeschaltetes Wasserabscheidesystem ist ferner aus der DE 198 21 952 C2 bekannt. Aus dieser Druckschrift ist es bekannt, den Abgasstrom der Brennstoffzelle über einen mit Flugzeug-Umgebungsluft gekühlten Wasserkondensor zu führen, wobei durch eine Temperaturabsenkung der feuchten Luft Wasser auskondensiert wird, das mittels eines Kondensatableiters einem Wasserreservoir zugeführt wird.

Als Verwendungszweck für das abgeschiedene Wasser wird in der DE 102 16 709 A1 die Luftbefeuchtung/Klimatisierung und die WC-Spülung, Trinkwasserversorgung, Duschwasserversorgung und Waschwasserversorgung beschrieben.

DE 101 52 311 A1 offenbart ein System zur effektiven und wirkungsgradgünstigen Rückgewinnung von Wasser aus dem Abgasstrom eine Brennstoffzelle von Fahrzeugen. Hierbei durchläuft der Abgasstrom einen Wärmeaustauscher auf dessen warmen Seite zur Kondensation von Wasser aus dem Brennstoffzellenabgas, bevor der Abgasstrom über einen Expander expandiert wird. Der durch die Expansion gekühlte Abgasstrom dient dem Wärmeaustauscher auf dessen kalter Seite also Kühlmittel. DE 199 43 059 A1 beschreibt ebenfalls ein System zur Auskondensation von einem Großteil des Wassers aus den Abgasströmen eines Brennstoffzellensystems. Hier befindet sich ebenfalls ein Wärmeaustauscher vor dem Drosselventil.

Es ist die Aufgabe der vorliegenden Erfindung ein System zur Wassergewinnung aus einem Abgasstrom einer Brennstoffzelle eines Flugzeuges dahingehend weiterzubilden, dass dessen Effizienz gegenüber vorbekannten Systemen gesteigert wird.

Diese Aufgabe wird durch ein System zur Wassergewinnung aus einem Abgasstrom einer Brennstoffzelle eines Luftfahrzeuges mit den Merkmalen des Patentanspruchs 1 gelöst. Danach ist vorgesehen, dass ein Hauptwärmeüberträger vorgesehen ist, der auf seiner warmen Seite von Brennstoffzellenabgas durchströmt wird und der Entspannungseinheit vorgeschaltet ist und der auf seiner kalten Seite von Stauluft oder Kabinenluft durchströmt wird und dass eine weitere Entspannungseinheit vorgesehen ist, die einlassseitig mit Kabinenabluft beaufschlagt wird und auslassseitig mit der kalten Seite des Hauptwärmeübertragers in Verbindung steht. Die Anordnung eines derartigen Wärmeübertragers vor der Entspannungsstufe hat energetische Vorteile in Bezug auf Wärmeübertragerleistung und Baugröße aufgrund des höheren Temperaturunterschiedes zwischen Wärmesenke (Stauluft oder Kabinenabluft) und Wärmequelle (Prozessluft bzw. Brennstoffzellenabgas). Denkbar ist, dass ein Teil der Kabinenabluft entweder direkt oder über die Entspannungsstufe bzw. -turbine als Wärmesenke dem Hauptwärmeübertrager zugeführt wird. Falls ausreichend Kabinenabluft zur Verfügung steht, kann auf eine zusätzliche Zufuhr von Stauluft verzichtet werden. Hierdurch werden die energetischen Verluste durch die Stauluftnutzung am Luftfahrzeug verringert. Im Fehlerfall (bei Kabinendruckverlust) wird das System vollständig über Außenluft mit Luft versorgt und mit Stauluft gekühlt.

Die Kondensation des Wassers erfolgt im Hochdruckbereich. Die Kondensation des im Abgasstrom der Brennstoffzelle enthaltenen Wassers ist aufgrund physikalischer Gesetzmäßigkeiten im Hochdruckbereich vor der Entspannungseinheit effektiver, so dass ein höherer Kondensationsgrad erhalten wird und auch eine wirksamere Entwässerung des Brennstoffzellenabgases erfolgen kann als bei vorbekannten Systemen. Dies ermöglicht eine nachfolgende Abkühlung der Luft auf Temperaturen weit unterhalb des Gefrierpunktes.

Das Kühlmedium des Kondensors wird durch in der Entspannungseinheit entspanntes, entfeuchtetes Brennstoffzellenabgas gebildet.

In bevorzugter Ausgestaltung der Erfindung steht der Kondensor auf seiner warmen Seite auslassseitig mit der Einlassseite eines Wasserabscheiders in Verbindung. In dem Wasserabscheider wird die von dem Kondensor einströmende Luft beispielsweise durch eingebaute Umlenkbleche (Swirl Vanes) in Drehung versetzt. Die relativ großen Wassertropfen werden durch die Zentrifugalkraft nach außen geworfen, wo sie sich in einem Sumpf ansammeln. Grundsätzlich sind auch beliebige andere Ausgestaltungen des Wasserabscheiders denkbar.

Besonders vorteilhaft ist es, wenn ein regenerativer Wärmetauscher vorgesehen ist, dessen warme Seite der warmen Seite des Kondensors vorgeschaltet ist. Dabei ist vorzugsweise vorgesehen, dass der regenerative Wärmetauscher auf seiner kalten Seite einlassseitig mit dem Auslass des Wasserabscheiders und auslassseitig mit dem Einlass der Entspannungseinheit in Verbindung steht. Die regenerative Wärmeübertragung hat in dieser Ausgestaltung die Erfindung die Aufgabe, die verbleibende Restfeuchtigkeit durch Wärmezufuhr zu verdampfen und die dem regenerativen Wärmeübertrager nachfolgende Entspannungseinheit vor Wasserschlag und Vereisung zu schützen und zu deren Leistungssteigerung beizutragen. Ebenso ist es denkbar, dass kein Reheater vorgesehen ist, und dass das Brennstoffzellenabgas in die warme Seite des Kondensors, anschließend in den Wasserabscheider und von dort in die Entspannungseinheit geführt wird. Das aus der Entspannungseinheit austretende Abgas dient vorzugsweise als Kühlmedium für den Kondensor bzw. wird der kalten Kondensorseite zugeführt.

Somit kann vorgesehen sein, dass der Kondensor auf seiner kalten Seite einlassseitig mit dem Auslass der Entspannungseinheit in Verbindung steht.

Somit ist vorzugsweise vorgesehen, dass das Wasser aus dem Brennstoffzellenabgas in einem Hochdruckwasserabscheidekreislauf abgetrennt wird, wobei das Abgas vorzugsweise zunächst den Reheater, anschließend den Kondensor und schließlich den Wasserabscheider durchströmt, in dem das in dem Kondensor auskondensierte Wasser abgeschieden wird. Nach Passieren des Wasserabscheiders strömt in dieser Ausgestaltung der Erfindung das entfeuchtete Brennstoffzellenabgas durch die kalte Seite des regenerativen Wärmetauschers, wobei es aufgewärmt wird, und sodann in die Entspannungseinheit, die vorzugsweise als Turbine ausgestaltet ist. Die Entspannungseinheit steht auslassseitig mit der Einlassseite der kalten Seite des Kondensors in Verbindung. Vorzugsweise dient das entfeuchtete, in der Entspannungseinheit gekühlte Brennstoffzellenabgas als Kühlmedium für den Kondensor und wird somit zur Kondensation der Feuchtigkeit des Brennstoffzellenabgases genutzt. Nach Passieren der kalten Seite des Kondensors wird das Brennstoffzellenabgas als "Offgas" in die Umgebung abgegeben.

Der Hauptwärmeübertrager kann in einem Stauluftkanal einer Flugzeugklimaanlage oder in einem separaten Stauluftkanal eines Flugzeuges angeordnet sein. Im Bodenbetrieb ist vorzugsweise vorgesehen, dass ein elektrisch angetriebenes Gebläse, das am Auslass des Hauptwärmeübertragers angeordnet ist, Außenluft durch den Hauptwärmeübertrager fördert. Dieses Gebläse ist nicht erforderlich, falls der Hauptwärmeübertrager in einem bestehenden Stauluftkanal einer Flugzeugklimaanlage (Environmental Control System (ECS)) angeordnet ist und auch im Bodenbetrieb von dort mit Kühlluft versorgt wird. Eine Anordnung des Hauptwärmeübertragers in einem ohnehin vorhandenen Stauluftkanal einer Flugzeugklimaanlage macht die Installation eines separaten Stauluftkanals am Luftfahrzeug überflüssig.

In weiterer Ausgestaltung der Erfindung ist vorgesehen, dass der Wasserabscheider mit der kalten Seite des Hauptwärmeübertragers, vorzugsweise mit dessen kalter Einlassseite oder mit der kalten Seite eines Stauluftwärmeübertragers einer Flugzeugklimaanlage, vorzugsweise mit dessen kalter Einlassseite in Verbindung steht, so dass überschüssiges, abgeschiedenes Wasser am Eintritt der Kühlluft des Hauptwärmeübertragers oder eines Stauluftkühlers des ECS oder in den Hauptwärmeübertrager bzw. Stauluftkühler eingespritzt werden kann, um dort die Kühlleistung zu erhöhen.

Wie oben ausgeführt, ist die Entspannungsstufe vorzugsweise als Turbine ausgeführt.

Weiterhin kann vorgesehen sein, dass die Turbine und ein Verdichter auf einer gemeinsamen Welle angeordnet sind, der einlassseitig mit der Luftversorgung für die Brennstoffzelle und auslassseitig mit der Brennstoffzelle in Verbindung steht. Weiterhin kann vorgesehen sein, dass die Turbine auf einer Welle sitzt, die mit einem Motor und/oder einem Generator in Verbindung steht bzw. einen Motor und/oder ein Getriebe aufweist. Auf dieser Welle kann ferner der genannte Verdichter angeordnet sein.

Ebenso ist es grundsätzlich möglich, den Verdichter unabhängig von der Turbine bzw. Entspannungseinheit auszuführen.

Um die Energieeffizienz des Systems weiter zu steigern, kann vorgesehen sein, dass die Brennstoffzelle im Flug von Kabinenabluft versorgt wird. Diese Abluft stellt ein deutliches Exergiepotential dar, da sie auf einem höheren Druck bzw. Temperaturniveau als die Umgebungsluft zur Verfügung steht. Am Prozessende wird über die Entspannungsstufe bzw. Turbine aus der verbleibenden Druckenergie mechanische Leistung zurückgewonnen, die über den auf der gleichen Welle befindlichen Generator in elektrische Energie umgewandelt wird.

In weiterer Ausgestaltung der Erfindung ist vorgesehen, dass es sich bei der Brennstoffzelle um eine Hochtemperaturbrennstoffzelle handelt.

Der Begriff "Brennstoffzelle" umfasst gemäß der vorliegenden Erfindung nicht nur eine einzelne Brennstoffzelle, sondern vorzugsweise auch ein Brennstoffzellensystem, beispielsweise einen Brennstoffzellenstapel.

Der Brennstoffzelle kann ein Reformer zur Herstellung von Wasserstoff vorgeschaltet und ein Nachbrenner nachgeschaltet sein. Bei dem Reformer handelt es sich beispielsweise um einen autothermischen Reformer.

Besonders vorteilhaft ist es, wenn die Brennstoffzelle, der Reformer, sowie der Nachbrenner vorzugsweise in einem gemeinsamen Druckkessel angeordnet sind. Der Druckkessel kann mit Inertgas, vorzugsweise mit Stickstoff, oder auch mit Druckluft, vorzugsweise mit in dem Verdichter gemäß Anspruch 10 verdichteter Druckluft bedruckt sein. Es kann ein On-Board Inert Gas Generation System (OBIGGS) vorgesehen sein, aus dem der Druckkessel mit Inertgas, vorzugsweise mit Stickstoff versorgt wird.

In weiterer Ausgestaltung der Erfindung ist vorgesehen, dass der Entspannungseinheit kein Kondensor nachgeschaltet ist. Vorzugsweise ist vorgesehen, dass das Wasser vollständig oder zumindest weitgehend vor der Entspannungseinheit kondensiert und abgeschieden wird. Besonders vorteilhaft ist es, wenn der der Entspannungseinheit auf der warmen Seite vorgeschaltete Kondensor der einzige Kondensor des Systems ist.

Wie oben ausgeführt, ergibt sich eine besonders hohe Effizienz, wenn das den Kondensor auf seiner warmen Seite durchströmende Brennstoffzellenabgas ein Druckniveau über dem Umgebungsdruck aufweist. Vorzugsweise erfolgt eine Hochdruckwasserabscheidung.

Das in der Entspannungseinheit entspannte, entfeuchtete Brennstoffzellenabgas, das den Kondensor auf dessen kalter Seite durchströmt, weist vorzugsweise ein Druckniveau über oder auf Umgebungsdruck auf.

Die Erfindung betrifft ferner ein Luftfahrzeug mit einem System zur Wassergewinnung aus einem Abgasstrom einer Brennstoffzelle gemäß einem der Ansprüche 1 bis 22. Dabei kann vorgesehen sein, dass die Brennstoffzelle eine Hilfsgasturbine (Auxiliary Power Unit (APU)), die üblicherweise im Heck des Luftfahrzeuges eingebaut ist, ersetzt und die elektrische Energieversorgung am Boden wie auch im Flug auf einem effizienten Niveau realisiert.

Weitere Einzelheiten und Vorteile der Erfindung werden anhand eines in der Zeichnung dargestellten Ausführungsbeispiels näher erläutert. Es zeigen:
- Figur 1:: eine schematische Darstellung des erfindungsgemäßen Systems zur Wassergewinnung aus einem Abgasstrom einer Brennstoffzelle eines Luftfahrzeuges,

- Figur 2:: ein System gemäß Figur 1 mit zusätzlicher Entspannungsstufe zur Abkühlung der Kabinenluft und modifiziertem Hochdruckwasserabscheidekreislauf.

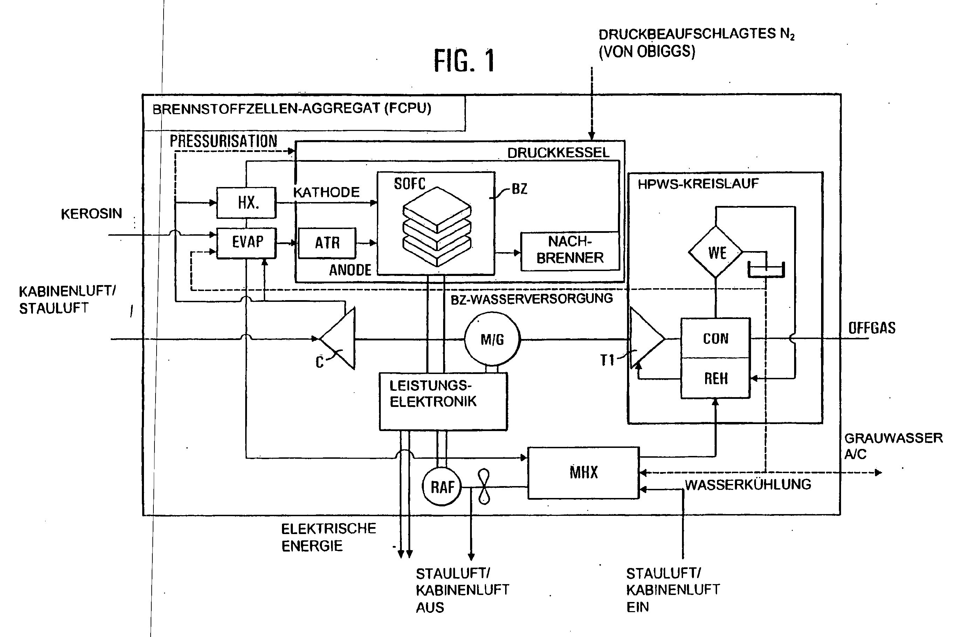

Figur 1 zeigt die in einem Druckkessel (Press. Vessel) angeordnete Brennstoffzelle BZ bzw. das Brennstoffzellensystem, das zur Energieversorgung eines Luftfahrzeuges dient. Bei der Brennstoffzelle BZ handelt es sich um eine Hochtemperaturbrennstoffzelle (Solid Oxide Fuel Cell (SOFC)), der ein autothermischer Reformer ATR vorgeschaltet ist.

An dieser Stelle sei darauf hingewiesen, dass das erfindungsgemäße System mit jeder beliebigen Art von Brennstoffzelle(n) betreibbar ist. Bei der SOFC handelt es nur um eine exemplarische Ausführung.

In dem autothermischen Reformer ATR wird das zugeführte Kerosin, das in einem Verdampfer EVAP verdampft wurde zu Wasserstoff und weiteren Reaktionsprodukten umgesetzt. Der Wasserstoff wird der Brennstoffzelle BZ anodenseitig zugeführt. Die Brennstoffzelle BZ wird kathodenseitig mit Luft (Kabinenabluft oder Umgebungsluft) beaufschlagt, die vor der Zufuhr zur Brennstoffzelle BZ in einem Wärmetauscher HX. erwärmt wird. Der Brennstoffzelle nachgeschaltet ist ein Nachbrenner (Burner) der auslassseitig mit der heißen Seite des genannten Wärmetauschers HX. sowie des Verdampfers EVAP in Verbindung steht, wie dies aus Figur 1 hervorgeht.

Wie dies aus Figur 1 weiter ersichtlich ist, befindet sich die Brennstoffzelle BZ der Reformer ATR sowie der Nachbrenner in dem isolierten Druckkessel. Der isolierte Kessel ist notwendig, um die hohe konstante Umgebungstemperatur (600 bis 800 °C), die für den elektrochemischen Prozess notwendig ist, zu gewährleisten. Ein weiterer Vorteil ergibt sich daraus, dass die mechanische Druckbelastung der Brennstoffzelle bzw. des Brennstoffzellen-Stacks aufgrund des Differenzdruckes zur Kesselumgebung reduziert ist. Der Druckkessel ist mit Inertgas, vorzugsweise mit Stickstoff bedruckt, um die Explosionsgefahr bei austretendem Wasserstoff aus dem Reformer ATR oder der Brennstoffzelle BZ zu beseitigen. Wie aus Figur 1 ersichtlich, kann das Inertgas von einem luftfahrzeugeigenen System (On-Board Inert Gas Generation System (OBIGGS)) erzeugt werden, das auch für die aus Sicherheitsgründen notwendige Tankbelüftung Inertgas generiert. Optional kann der Druckkessel auch mit Druckluft versorgt werden, die von dem Verdichter C bereitgestellt wird. Diese Option ist in Figur 1 mit dem Vermerk "pressurisation" dargestellt. Aufgrund der Komponentendruckverluste nach dem Kompressor C ist der Kesseldruck immer geringfügig höher als der Prozessdruck, vorausgesetzt der Kessel ist dicht. Dies bewirkt, dass bei einer Leckage an den Systemkomponenten (Brennstoffzelle, Reformer) immer Luft in das System hineingedrückt wird und es somit zu keiner sicherheitskritischen Konzentration im Kessel kommen kann.

Wie aus Figur 1 weiter ersichtlich, durchströmt das heiße Brennstoffzellenabgas nach Passieren des Verdampfers EVAP den Hauptwärmeübertrager MHX. Dieser Wärmeübertrager wird auf seiner kalten Seite von Umgebungsluft oder Kabinenabluft durchströmt und kühlt dabei das auf der warmen Seite zugeführte Brennstoffzellenabgas. Ein elektrisch angetriebener Fan (RAM Air Fan (RAF)), der am Auslass des Hauptwärmeübertragers MHX angeordnet ist, zieht Außenluft über den Hauptwärmeübertrager MHX. Ist der Hauptwärmeübertrager in einem bestehenden Stauluftkanal einer Flugzeugklimaanlage (ECS) angeordnet und wird dieser auch im Bodenbetrieb von dort mit Kühlluft versorgt, ist der RAF nicht erforderlich. Bei einer derartigen Konstruktion entfällt die Installation eines separaten Stauluftkanals am Luftfahrzeug. Grundsätzlich ist es jedoch ebenso möglich, dass der Hauptwärmeübertrager in einem separaten Stauluftkanal, d. h. nicht im Stauluftkanal einer Flugzeugklimaanlage angeordnet ist.

Nach Durchströmen des Hauptwärmeübertragers MHX strömt das vorgekühlte Brennstoffzellenabgas in die warme Seite eines im Hochdruckbereich, d. h. vor der Entspannungseinheit angeordneten regenerativen Wärmeübertragers REH (im folgenden Reheater genannt). Das Brennstoffzellenabgas durchströmt sodann die warme Seite des dem Reheater REH nachgeschalteten Kondensors CON, in dem die Kondensation von in dem Brennstoffzellenabgas enthaltenem Wasser erfolgt. In dem der warmen Seite des Kondensors nachgeschalteten Wasserabscheider WE wird die vom Kondensor CON einströmende Luft durch eingebaute Umlenkbleche (Swirl Vanes) in Drehung versetzt. Dabei werden die relativ großen Wassertropfen durch die Zentrifugalkraft nach außen geworfen, wo sie sich in dem in Figur 1 dargestellten Sumpf ansammeln. Die Wasserabscheidung vollzieht sich wie auch die Kondensation somit ebenfalls im Hochdruckbereich, d. h. vor der Entspannung. Anschließend durchströmt das auf diese Weise entfeuchtete Brennstoffzellenabgas die kalte Seite des Reheaters REH, wobei die verbleibende Restfeuchtigkeit durch Wärmezufuhr verdampft wird, was zur Leistungssteigerung der der kalten Seite des Reheaters REH nachgeschalteten Turbine T1 führt und diese vor Wasserschlag und Vereisung schützt. Nach Entspannung des Brennstoffzellenabgases in der Turbine T1 wird dieses durch die kalte Seite des Kondensors CON geführt und dient somit als Kühlmedium für den Kondensationsprozess. Das Abgas wird anschließend an die Flugzeugumgebungsluft als Offgas abgeführt.

Das im Wasserabscheider abgeschiedene Wasser wird einerseits zur Versorgung der Brennstoffzelle mit Wasser (FC Water Supply) verwendet. Überschüssiges, abgeschiedenes Wasser kann optional vorzugsweise am Eintritt der Kühlluft des Hauptwärmeübertragers MHX oder auch eines Stauluftkühlers einer Flugzeugklimaanlage eingespritzt werden, um dort die Kühlleistung zu erhöhen. Die Zufuhr des Wassers zum Hauptwärmeübertrager MHX ist in Figur 1 durch die gestrichelte Linie angedeutet.

Wie aus Figur 1 ersichtlich, sitzt die Turbine T1 mit dem Verdichter C, dem Motor M und dem Generator G auf einer gemeinsamen Welle. Der Verdichter C dient zur Kompression von Kabinenabluft oder Umgebungsluft, die nach ihrer Kompression dem Brennstoffzellensystem BZ zugeführt wird. Wie aus Figur 1 ersichtlich, wird die verdichtete Luft einerseits dem Verdampfer EVAP für Kerosin und andererseits einem Wärmeübertrager HX. zugeführt. Nach Durchströmen dieses Wärmeübertragers wird die Luft der Kathodenseite der Brennstoffzelle BZ zugeleitet.

Um die Energieeffizienz weiter zu steigern ist es vorteilhaft, wenn das Brennstoffzellensystem BZ im Flug von Kabinenabluft versorgt wird. Die Abluft stellt ein deutliches Exergiepotential dar, da sie auf einem höheren Druck bzw. Temperaturniveau als die Umgebungsluft zur Verfügung steht. Besonders bevorzugt ist es daher, wenn das System eingangsseitig mit Kabinenabluft beaufschlagt wird.

Die Brennstoffzelle BZ gemäß Figur 1 dient zur Bereitstellung elektrischer Energie, die beispielsweise zum Antrieb des Motors der Welleneinrichtung dient, auf der sich ferner die Turbine T1, der Verdichter C und der Generator G befinden. Die elektrische Energie kann ferner dazu verwendet werden, das Gebläse RAF des Hauptwärmeübertragers anzutreiben. Grundsätzlich kann vorgesehen sein, dass die Brennstoffzelle BZ eine Hilfsgasturbine APU, die üblicherweise im Heck eines Luftfahrzeuges eingebaut ist, ersetzt und die elektrische Energieversorgung am Boden wie auch im Flug auf einem effizienteren Niveau realisiert. Hierbei sind alle Einflussgrößen wie energetischer Gesamtwirkungsgrad, Gewicht, Stauluftnutzung, Triebwerkszapfluftverbrauch etc., die eine energetische Beeinflussung des Luftfahrzeuges verursachen, zu berücksichtigen. Durch das erfindungsgemäße System wird Wasser aus dem Brennstoffzellenabgasstrom auskondensiert, vorzugsweise um den eigenen Wasserbedarf des Brennstoffzellensystems zu decken und das restliche Wasser an Bord des Luftfahrzeuges effektiv zu verwenden. Hierdurch wird der Luftfahrzeugenergieaufwand, der zum Transportieren der Wasserbevorratung notwendig ist, reduziert.

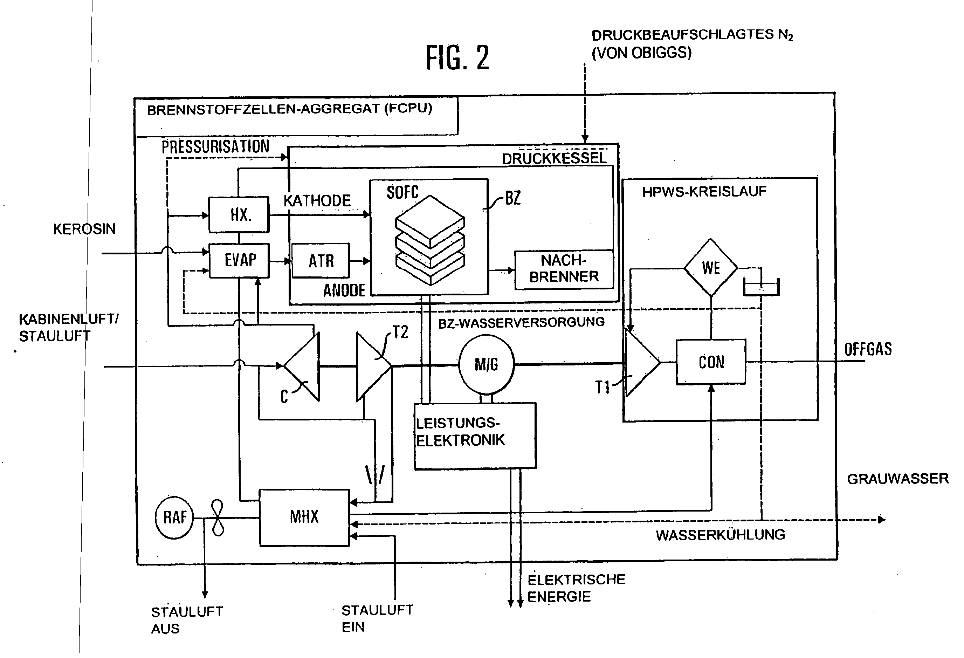

Figur 2 zeigt ein System zur Wassergewinnung aus einem Abgasstrom einer Brennstoffzelle eines Luftfahrzeuges, das sich von dem System gemäß Figur 1 dadurch unterscheidet, dass eine weitere Turbine T2 vorgesehen ist. Die zusätzliche Turbinenstufe T2 entspannt Kabinenabluft auf Umgebungsdruck. Die auf diese Weise gekühlte Luft wird als Wärmesenke dem Hauptwärmeübertrager MHX zugeführt. In dem Ausführungsbeispiel gemäß Figur 2 wird ein Teil der Kabinenabluft entweder direkt oder über die Entspannungsturbine T2 als Wärmesenke dem Hauptwärmeübertrager MHX zugeführt. Der Hauptwärmeübertrager MHX kann kaltluftseitig zusätzlich von Umgebungsluft durchströmt werden. Die Kabinenabluft wird gemäß Figur 2 somit zur Versorgung der Brennstoffzelle BZ nach Verdichtung in dem Kompressor C als auch zur Kühlung des Hauptwärmeübertragers MHX verwendet. Sofern ausreichend Kabinenabluft zur Verfügung steht, kann auf eine zusätzliche Zufuhr von Stauluft verzichtet werden. Hierdurch werden die energetischen Verluste durch die Stauluftnutzung am Luftfahrzeug verringert. Für den Fall, dass sich ein Kabinendruckverlust ergibt, wird das System vollständig über Außenluft mit Luft versorgt und mit Stauluft gekühlt.

Ein weiterer Unterschied der Architektur gemäß Figur 2 gegenüber dem System gemäß Figur 1 ergibt sich daraus, dass der Hochdruckwasserabscheidekreislauf keinen Reheater aufweist. Wie aus Figur 2 ersichtlich, strömt das in dem Hauptwärmeübertrager MHX gekühlte Brennstoffzellenabgas unmittelbar in die warme Seite des Kondensors CON und von dort in den Wasserabscheider WE zur Abscheidung des Kondensats. Der Wasserabscheider WE ist auslassseitig mit der Einlassseite der Entspannungsstufe, d. h. der Turbine T1 verbunden. In der Turbine T1 erfolgt die Entspannung des entfeuchteten Brennstoffzellenabgases. Nach dem Durchströmen der Turbine T1 wird das Brennstoffzellenabgasals Kühlmedium durch die kalte Seite des Kondensors CON geführt und sodann verworfen. Die Systeme gemäß Figur 1 und Figur 2 stimmen insoweit überein, dass das Brennstoffzellenabgas in einem der Turbine T1 vorgeschalteten Hochdruckwasserabscheidekreisluaf (HPWS loop) entfeuchtet wird.

Wie aus Figur 2 ersichtlich, befindet sich die zusätzliche Turbinenstufe T2 mit dem Luftverdichter C, der Abgasturbine T1 und dem Motor M/Generator G auf einer gemeinsamen Welle.

## Patentansprüche

1. System zur Wassergewinnung aus einem Abgasstrom einer Brennstoffzelle eines Luftfahrzeuges mit einer Brennstoffzelle (BZ) zur Energieversorgung des Luftfahrzeuges, mit einer Entspannungseinheit (T1), in der das Brennstoffzellenabgas entspannt wird sowie mit einem Kondensor (CON) zur Kondensation von Wasser aus dem Brennstoffzellenabgas, wobei der Kondensor (CON) auf seiner warmen Seite von dem Brennstoffzellenabgas und auf seiner kalten Seite von einem Kühlmedium durchströmt wird, wobei die warme Seite des Kondensors (CON) der Entspannungseinheit (T1) vorgeschaltet ist und wobei das Kühlmedium durch in der Entspannungseinheit (T1) entspanntes, entfeuchtetes Brennstoffzellenabgas gebildet wird, **dadurch gekennzeichnet, dass** ein Hauptwärmeübertrager (MHX) vorgesehen ist, der auf seiner warmen Seite von Brennstoffzellenabgas durchströmt wird und der Entspannungseinheit (T1) vorgeschaltet ist und der auf seiner kalten Seite von Stauluft oder Kabinenluft durchströmt wird und dass eine weitere Entspannungseinheit (T2) vorgesehen ist, die einlassseitig mit Kabinenabluft beaufschlagt wird und auslassseitig mit der kalten Seite des Hauptwärmeübertragers (MHX) in Verbindung steht.

2. System nach Anspruch 1, **dadurch gekennzeichnet, dass** der Kondensor (CON) auf seiner warmen Seite auslassseitig mit der Einlassseite eines Wasserabscheiders (WE) in Verbindung steht.

3. System nach einem der vorhergehenden Ansprüche, **dadurch gekennzeichnet, dass** ein regenerativer Wärmetauscher (REH) vorgesehen ist, dessen warme Seite der warmen Seite des Kondensors (CON) vorgeschaltet ist.

4. system nach Anspruch 2 und 3, **dadurch gekennzeichnet, dass** der regenerative Wärmetauscher (REH) auf seiner kalten Seite einlassseitig mit dem Auslass des Wasserabscheiders (WE) und auslassseitig mit dem Einlass der Entspannungseinheit (T1) in Verbindung steht.

5. System nach einem der vorhergehenden Ansprüche, **dadurch gekennzeichnet, dass** der Kondensor (CON) auf seiner kalten Seite einlassseitig mit dem Auslass der Entspannungseinheit (T1) in Verbindung steht.

6. System nach einem der vorhergehenden Ansprüche, **dadurch gekennzeichnet, dass** der Hauptwärmeübertrager (MHX) in einem Stauluftkanal einer Flugzeugklimaanlage oder in einem separaten Stauluftkanal eines Flugzeuges angeordnet ist.

7. System nach einem der Ansprüche 2 bis 6, **dadurch gekennzeichnet, dass** der Wasserabscheider (WE) mit der kalten Seite, vorzugsweise mit der kalten Einlassseite des Hauptwärmeübertragers (MHX) oder mit der kalten Seite, vorzugsweise mit der kalten Einlassseite eines Stauluftwärmeübertragers einer Flugzeugklimaanlage in Verbindung steht, so dass überschüssiges, abgeschiedenes Wasser am Eintritt der Kühlluft des Hauptwärmeübertragers (MHX) oder im Hauptwärmeübertrager oder am Eintritt der Kühlluft eines Stauluftwärmeübertragers oder im Stauluftwärmeübertrager einer Flugzeugklimaanlage eingespritzt werden kann.

8. System nach einem der vorhergehenden Ansprüche, **dadurch gekennzeichnet, dass** die Entspannungseinheit (T1) als Turbine ausgeführt ist.

9. System nach Anspruch 8, **dadurch gekennzeichnet, dass** die Turbine mit einem Verdichter (C) auf einer Welle sitzt, der einlassseitig mit der Luftversorgung für die Brennstoffzelle (BZ) und auslassseitig mit der Brennstoffzelle (BZ) in Verbindung steht.

10. System nach Anspruch 8 oder 9, **dadurch gekennzeichnet, dass** die Turbine auf einer Welle sitzt, auf der sich ein Motor (M) und/oder ein Generator (G) befindet oder die mit einem Motor (M) und/oder einem Generator (G) in Verbindung steht.

11. System nach einem der vorhergehenden Ansprüche, **dadurch gekennzeichnet, dass** es sich bei der Brennstoffzelle (BZ) um eine Hochtemperaturbrennstoffzelle handelt.

12. System nach einem der vorhergehenden Ansprüche, **dadurch gekennzeichnet, dass** der Brennstoffzelle (BZ) ein Reformer (ATR) zur Herstellung von Wasserstoff vorgeschaltet und ein Nachbrenner (Burner) nachgeschaltet ist.

13. System nach Anspruch 11, **dadurch gekennzeichnet, dass** die Brennstoffzelle (BZ), der Reformer (ATR) sowie der Nachbrenner (Burner) in einem gemeinsamen Druckkessel angeordnet sind.

14. System nach Anspruch 13, **dadurch gekennzeichnet, dass** der Druckkessel mit Inertgas, vorzugsweise mit Stickstoff, bedruckt ist.

15. System nach Anspruch 14, **dadurch gekennzeichnet, dass** ein On-Board Inert Gas Generation System (OBIGGS) zur Erzeugung des Inertgases, vorzugsweise des Stickstoffs, vorgesehen ist, das mit dem Druckkessel in Verbindung steht.

16. System nach Anspruch 13, **dadurch gekennzeichnet, dass** der Druckkessel mit Druckluft, vorzugsweise mit in dem Verdichter (C) gemäß Anspruch 9 verdichteter Druckluft bedruckt ist.

17. System nach einem der vorhergehenden Ansprüche, **dadurch gekennzeichnet, dass** der Entspannungseinheit (T1) kein Kondensor nachgeschaltet ist.

18. System nach einem der vorhergehenden Ansprüche, **dadurch gekennzeichnet, dass** der der Entspannungseinheit (T1) auf der warmen Seite vorgeschaltete Kondensor der einzige Kondensor des Systems ist.

19. System nach einem der vorhergehenden Ansprüche, **dadurch gekennzeichnet, dass** das den Kondensor (CON) auf seiner warmen Seite durchströmende Brennstoffzellenabgas ein Druckniveau über dem Umgebungsdruck aufweist.

20. System nach einem der vorhergehenden Ansprüche, **dadurch gekennzeichnet, dass** das in der Entspannungseinheit (T1) entspannte, entfeuchtetes Brennstoffzellenabgas ein Druckniveau über oder auf Umgebungsdruck aufweist.

21. Luftfahrzeug mit einem System zur Wassergewinnung aus einem Abgasstrom einer Brennstoffzelle gemäß einem der Ansprüche 1 bis 20.

## Claims

1. A system for water reclamation from an exhaust gas flow of a fuel cell of an aircraft comprising a fuel cell (BZ) for the energy supply of the aircraft, comprising an expansion unit (T1) in which the fuel cell exhaust gas is expanded and comprising a condenser (CON) for the condensation of water from the fuel cell exhaust gas, with the condenser (CON) being flowed through on its hot side by the fuel cell exhaust gas and on its cold side by a cooling medium, wherein the hot side of the condenser (CON) is connected upstream of the expansion unit (T1) and wherein the cooling medium is formed by dehumidified fuel cell exhaust gas expanded in the expansion unit (T1), **characterized in that** a main heat transfer device (MHX) is provided which is flowed through by fuel cell exhaust gas on its hot side and is connected upstream of the expansion unit (T1) and is flowed through by RAM air or cabin air on its cold side; and **in that** a further expansion unit (T2) is provided which is acted on by vitiated cabin air on the inlet side and is in communication with the cold side of the main heat transfer device (MHX) on the outlet side.

2. A system in accordance with claim 1, wherein the outlet side of the condenser (CON) is in communication at its hot side with the inlet side of a water separator (WE).

3. A system in accordance with any one of the preceding claims, wherein a regenerative heat exchanger (REH) is provided whose hot side is connected upstream of the hot side of the condenser (CON).

4. A system in accordance with claims 2 and 3, wherein the inlet side of the regenerative heat exchanger (REH) on its cold side is in communication with the outlet of the water separator (WE) and its outlet side is in communication with the inlet of the expansion unit (T1).

5. A system in accordance with any one of the preceding claims, wherein the inlet side of the condenser (CON) is in communication at its cold side with the outlet of the expansion unit (T1).

6. A system in accordance with any one of the preceding claims, wherein the main heat transfer device (MHX) is arranged in a RAM air passage of an aircraft air-conditioning system or in a separate RAM air passage of an aircraft.

7. A system in accordance with any one of the claims 2 to 6, wherein the water separator (WE) is in communication with the cold side, preferably with the cold inlet side of the main heat transfer device (MHX) or with the cold side, preferably with the cold inlet side of a RAM air heat transfer device of an aircraft air-conditioning system so that excess, separated water can be injected at the intake of the cooling air of the main heat transfer device (MHX) or in the main heat transfer device or at the intake of the cooling air of a RAM air heat transfer device or in the RAM air heat transfer device of an aircraft air-conditioning system.

8. A system in accordance with any one of the preceding claims, wherein the expansion unit (T1) is designed as a turbine.

9. A system in accordance with claim 8, wherein the turbine is seated on a shaft with a compressor (C) which is in communication on the inlet side with the air supply for the fuel cell (BZ) and on the outlet side with the fuel cell (BZ).

10. A system in accordance with either of claims 8 or 9, wherein the turbine is seated on a shaft on which a motor (M) and/or a generator (G) is/are located or which is in communication with a motor (M) and/or a generator (G).

11. A system in accordance with any one of the preceding claims, wherein the fuel cell (BZ) is a high-temperature fuel cell.

12. A system in accordance with any one of the preceding claims, wherein a reformer (ATR) for the manufacture of hydrogen is connected upstream of the fuel cell (BZ) and an afterburner (burner) is connected downstream of it.

13. A system in accordance with claim 11, wherein the fuel cell (BZ), the reformer (ATR) and the afterburner (burner) are arranged in a common pressure vessel.

14. A system in accordance with claim 13, wherein the pressure vessel is pressurized with inert gas, preferably with nitrogen.

15. A system in accordance with claim 14, wherein an onboard inert gas generation system (OBIGGS) for the generation of the inert gas, preferably of the nitrogen, is provided which is in communication with the pressure vessel.

16. A system in accordance with claim 13, wherein the pressure vessel is pressurized by compressed air, preferably compressed air compressed in the compressor (C) in accordance with claim 9.

17. A system in accordance with any one of the preceding claims, wherein no condenser is connected downstream of the expansion unit (T1).

18. A system in accordance with any one of the preceding claims, wherein the condenser connected upstream of the expansion unit (T1) on the hot side is the only condenser of the system.

19. A system in accordance with any one of the preceding claims, wherein the fuel cell exhaust gas flowing through the condenser (CON) on its hot side has a pressure level above the ambient pressure.

20. A system in accordance with any one of the preceding claims, wherein the dehumidified exhaust gas expanded in the expansion unit (T1) has a pressure level over or at the ambient pressure.

21. An aircraft comprising a system for water reclamation from an exhaust gas flow of a fuel cell in accordance with any one of the claims 1 to 20.

## Revendications

1. Système pour produire de l'eau à partir d'un flux de gaz d'échappement d'une cellule de combustible d' un aéronef comprenant une cellule de combustible (BZ) pour l'alimentation en énergie de l'aéronef, une unité de détente (T1), dans laquelle le gaz d'échappement de la cellule de combustible est détendu et un condenseur (CON) pour la condensation d'eau à partir du gaz d'échappement de la cellule de combustible, le condenseur (CON) étant traversé sur son côté chaud par le gaz d'échappement de la cellule de combustible et sur son côté froid par un milieu réfrigérant, le côté chaud du condenseur (CON) étant placé en amont de l'unité de détente (T1) et le milieu réfrigérant étant formé par du gaz d'échappement de la cellule de combustible humidifié et détendu dans l'unité de détente (T1), **caractérisé en ce qu'**un échangeur de chaleur principal (MHX) est prévu, lequel est traversé sur son côté chaud par du gaz d'échappement de la cellule de combustible et placé en amont de l'unité de détente (T1) et qui est traversé sur son côté froid par de l'air dynamique ou de l'air de cabine, et **en ce qu'**il est prévu une autre unité de détente (T2) qui est alimentée côté entrée avec de l'air de cabine et est en liaison côté sortie avec le côté froid de l'échangeur de chaleur principal (MHX).

2. Système selon la revendication 1, **caractérisé en ce que** le condenseur (CON) est en liaison sur son côté chaud côté sortie avec le côté entrée d'un séparateur d'eau (WE).

3. Système selon l'une quelconque des revendications précédentes, **caractérisé en ce qu'**il est prévu un échangeur de chaleur (REH) régénérateur, dont le côté chaud est placé en amont du côté chaud du condenseur (CON).

4. Système selon les revendications 2 et 3, **caractérisé en ce que** l'échangeur de chaleur régénérateur (REH) est en liaison sur son côté froid côté entrée avec la sortie du séparateur d'eau (WE) et côté sortie avec l'entrée de l'unité de détente (T1).

5. Système selon l'une quelconque des revendications précédentes, **caractérisé en ce que** le condenseur (CON) est en liaison sur son côté froid côté entrée avec la sortie de l'unité de détente (T1).

6. Système selon l'une quelconque des revendications précédentes, **caractérisé en ce que** l'échangeur de chaleur principal (MHX) est disposé dans un canal d'air dynamique d'une installation de climatisation d'avion ou dans un canal d'air dynamique séparé d'un avion.

7. Système selon l'une quelconque des revendications 2 à 6, **caractérisé en ce que** le séparateur d'eau (WE) est en liaison avec le côté froid, de préférence avec le côté entrée froid de l'échangeur de chaleur principal (MHX) ou avec le côté froid, de préférence avec le côté entrée froid d'un échangeur de chaleur à air dynamique d'une installation de climatisation d'avion, de sorte que l'eau excédentaire et séparée peut être injectée à l'entrée de l'air de refroidissement de l'échangeur de chaleur principal (MHX) ou dans l'échangeur de chaleur principal ou à l'entrée de l'air de refroidissement d'un échangeur de chaleur à air dynamique ou dans l'échangeur de chaleur à air dynamique d'une installation de climatisation d'avion.

8. Système selon l'une quelconque des revendications précédentes, **caractérisé en ce que** l'unité de détente (T1) est conçue comme turbine.

9. Système selon la revendication 8, **caractérisé en ce que** la turbine est logée sur un arbre avec un compresseur (C) qui est en liaison côté entrée avec l'alimentation en air pour la cellule de combustible (BZ) et côté sortie avec la cellule de combustible (BZ).

10. Système selon la revendication 8 ou 9, **caractérisé en ce que** la turbine est logée sur un arbre, sur lequel se trouve(nt) un moteur (M) et/ou un générateur (G) ou qui est en liaison avec un moteur (M) et/ou avec un générateur (G).

11. Système selon l'une quelconque des revendications précédentes, **caractérisé en ce que**, en ce qui concerne la cellule de combustible (BZ), il s'agit d'une cellule de combustible à haute température.

12. Système selon l'une quelconque des revendications précédentes, **caractérisé en ce qu'**un reformeur (ATR) est placé en amont de la cellule de combustible (BZ) pour la fabrication d'hydrogène et un post-brûleur (Burner) est placé en aval de cette cellule.

13. Système selon la revendication 11, **caractérisé en ce que** la cellule de combustible (BZ), le reformeur (ATR) et le post-brûleur (Burner) sont disposés dans une chaudière à pression commune.

14. Système selon la revendication 13, **caractérisé en ce que** la chaudière à pression est mise en pression avec du gaz inerte, de préférence de l'azote.

15. Système selon la revendication 14, **caractérisé en ce qu'**un On-Board Inert Gaz Generation System (OBIGGS) est prévu pour générer du gaz inerte, de préférence de l'azote, qui est en liaison avec la chaudière à pression.

16. Système selon la revendication 13, **caractérisé en ce que** la chaudière à pression est mise sous pression avec de l'air comprimé, de préférence avec de l'air comprimé dans le compresseur (C) selon la revendication 9.

17. Système selon l'une quelconque des revendications précédentes, **caractérisé en ce qu'**aucun condenseur n'est placé en amont de l'unité de détente (T1).

18. Système selon l'une quelconque des revendications précédentes, **caractérisé en ce que** le condenseur placé en amont de l'unité de détente (T1) sur le côté chaud est l'unique condenseur du système.

19. Système selon l'une quelconque des revendications précédentes, **caractérisé en ce que** le gaz d'échappement de la cellule de combustible traversant le condenseur (CON) sur son côté chaud présente un niveau de pression au-dessus de la pression ambiante.

20. Système selon l'une quelconque des revendications précédentes, **caractérisé en ce que** le gaz d'échappement de la cellule de combustible humidifié et détendu dans l'unité de détente (T1) présente un niveau de pression supérieur ou égal à la pression ambiante.

21. Aéronef comprenant un système pour produire de l'eau à partir d'un flux de gaz d'échappement d'une cellule de combustible selon l'une quelconque des revendications 1 à 20.
